# EUROPEAN PATENT APPLICATION

(11) **EP 2 105 873 A1**
(43) Date of publication of application: **30.09.2009**
(21) Application number: 08425147.9
(22) Date of filing: 11.03.2008
(51) Int. Cl.: G06Q 20/00

(54) **System and method for performing a transaction**

(71) Applicant: Imunant S.r.l., 21013 Gallarate (VA) (IT)
(72) Inventor: Locarno, Efrem, 21013 Gallarate Varese (IT); Salgarelli, Luca, 20045 Besana in Brianza (Milano) (IT); Tonesi, Dario Serafino, 25070 Sabbio Chiese (Brescia) (IT)
(74) Representative: Bonvicini, Davide

(57) **Abstract**

A system (1) for performing a transaction comprises a terminal (10) adapted to perform a transaction required by a user (USERᵢ), user authentication means (20) and a transaction server (50) adapted to communicate with the terminal (10). The user authentication means (20) comprise a first (30) and a second (40) authentication device adapted to communicate with the terminal (10) through respectively a first communication channel (CHAN1) and second communication channel (CHAN2) and comprise storage means (32,42) for storing respective first (KMᵢ) and second (KRᵢ) user authentication keys. The transaction server (50) comprises storage means (51) for storing, for each of the authentication devices (30,40), respective first (KSMᵢ) and second (KSRᵢ) server authentication keys. In particular, the first authentication keys (KMᵢ,KSMᵢ) are distinct from the second authentication keys (KRᵢ, KRMᵢ)

## Description

The present invention refers to a system for performing a transaction according to the preamble of claim 1.

In another aspect, the present invention concerns a method for performing a transaction.

Systems for performing a transaction are known in the state of the art.

US 2007/0156436 discloses a method and a system for completing a transaction required by a user. The system comprises a mobile hand-held device, a point-of-sale terminal, a transaction server and a management server.

The mobile device comprises a processor, a secure memory coupled to the processor, a first transceiver and a second transceiver coupled to the processor and a visual display. The first transceiver is adapted to send transaction request signals and receive transaction response signals over a first communication channel while the second transceiver is adapted to send outgoing voice and data signals and receive incoming voice and data signals over a second communication channel.

In particular, the point-of-sale terminal receives one of the transaction request signals and transmits the one transaction signal to the transaction server. The transaction server receives the one transaction request signal from the point-of-sale terminal, verifies the transaction, and forwards a transaction verification signal to the management server. Finally, the management server receives the transaction verification signal, identifies the user corresponding thereto, and provides as one of the transaction signals a first transaction response signal to the second radio transceiver.

In accordance with the system and the method described in the US 2007/0156436 document, the first communication channel is used for the transaction request while the second communication channel is used for the transaction confirmation.

In substance, the transaction response signal is sent to the mobile hand-held device via a communication channel distinct from the communication channel used for initiating the transaction. Such a solution, although could turn out to be convenient for some aspects, does not improve the transaction security if compared with previously known systems. On the contrary, such a solution needs two distinct transceivers built in a single hand-held device.

The scope of the present invention is to provide a system for performing a transaction with functional and structural characteristics so as to overcome the drawbacks of the prior art.

This scope is achieved by a system for performing a transaction in accordance with claim 1.

In particular, the system is based on two authentication devices endowed with their respective authentication keys and able to communicate over two distinct and independent channels. Thanks to such characteristic, the system allows to validate a transaction only in presence of authentication codes generated from the two distinct authentication keys and exchanged over two distinct and independent communication channels.

The above mentioned scope is also achieved by a method for performing a transaction as specified in claim 12.

Further characteristics and the benefits of the system and the method for performing a transaction according to the present invention will come out of the following description, given as an informative and not limiting example, with reference to the attached figure, where:

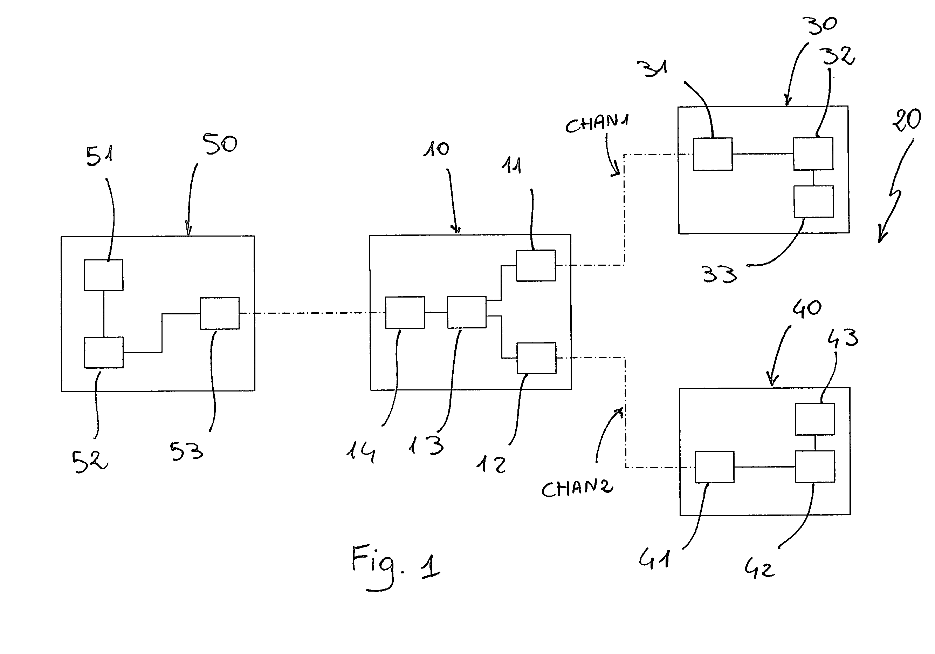

- Figure 1 gives an overview of a system for performing a transaction according to the present invention.

With regards to the attached figures, with 1 is comprehensively shown a system for performing a transaction according to the present invention.

The system 1 comprises a terminal 10 adapted to perform a transaction required by a user USERᵢ, user authentication means 20 and a transaction server 50 adapted to communicate with a terminal 10.

In the following of the present description we will refer, in a non limiting way, to a terminal 10 as a terminal for monetary transaction. Alternatively, the terminal 10 could be any other terminal adapted to perform a transaction.

As an example, in case the required transaction is the opening of an automatic gate in an identification system, the terminal could be built in a column where the user must authenticate with his or her authentication means in order to enable the opening of the gate.

According to another example, the system could be used in user loyalty circuits, typically used in gas stations. In this case, the terminal could be installed next to the refuelling unit, where the user must authenticate with their authentication means in order to get the loyalty points provided by the gas station manager.

The transaction request received by the terminal 10 is identified by a plurality of transaction TRANS identification codes.

According to one embodiment, the plurality of transaction identification codes TRANS comprises a terminal identification code TERMINAL_ID, a transaction identification code TRANS_ID, a user identification code USER_IDᵢ, and a transaction server identification code SC_ID.

The terminal 10 comprises first communication means 11 adapted to communicate with the user authentication means 20 via a first communication channel CHAN1 and second communication means 12 adapted to communicate with the user authentication means 20 via a second communication channel CHAN2 distinct and independent of the first communication channel CHAN1.

The user authentication means 20 are associated to the user identification code USER_IDᵢ, that univocally identifies the USERᵢ user who required the transaction, and comprise a first user authentication device 30 and a second user authentication device 40 adapted to communicate with the terminal 10 through the first communication channel CHAN1 and the second communication channel CHAN2, respectively.

It should be noted that the transaction may be indistinctly required by the terminal 10 to the user or by the USERᵢ user to the terminal 10.

In order to allow the communication between the terminal 10 and the two user authentication devices 30, 40, such devices 30, 40 comprise respectively communication means 31 for communicating with the first communication means 11 of the terminal 10 via the first communication channel CHAN1 and communication means 41 for communicating with the second communication means 12 of the terminal 10 via the second communication channel CHAN2.

The two user authentication devices 30, 40 comprise also respective storage means 32, 42 for storing the user identification code USER_IDᵢ and first and second user authentication keys KMᵢ and KRᵢ, respectively.

The transaction server 50 comprises storage means 51 for storing, for the two authentication devices 30,40 of the USERᵢ user, the user identification code USER_IDᵢ of such user USERᵢ and first and second server authentication keys KSMᵢ and KSRᵢ.

In particular, the first user and server authentication keys, KMᵢ and KSMᵢ, are distinct from the second user and server authentication keys, KRᵢ and KSRᵢ. The use of distinct authentication keys, precisely the first authentication keys KMᵢ and KSMᵢ, and the second authentication keys KRᵢ and KSRᵢ, on the two user authentication devices 30,40 and on the transaction server 50 and the opportunity of the terminal 10 to communicate with the two user authentication devices 30,40 over two distinct and independent channels CHAN1 and CHAN2 allows to perform a transaction with at least two distinct and independent authentication levels. In this way the security of the transaction is highly improved with a resulting benefit in terms of reliability, flexibility and security for service providers that use such system.

It is pointed out that, in the present invention, each of the terms first authentication keys and second authentication keys, either referred to the user or server authentication keys, indicates one or more authentication keys.

In order to establish communication between the terminal 10 and the transaction server 50, the terminal 10 comprises a data interface 14 and the transaction server 50 comprises a data interface 53. In particular, the two data interfaces 14, 53 may be connected through a wide band Internet link, with a secure connection in order to guarantee confidentiality, authentication and integrity of the information exchanged between the transaction server 50 and the terminal 10.

According to one embodiment, the two user authentication devices 30, 40 and the transaction server 50 comprise computing means 33,43 and 52, respectively, for generating authentication codes as function of the authentication keys stored in the respective storage means 32, 42 and 51 and of the plurality of transaction identification codes TERMINAL_ID, TRANS_ID, USER_IDᵢ, SC_ID and other potential identification codes in case they should be necessary in order to identify in a unambiguous way a transaction (e.g., model and price of the bought items).

The authentication keys may be either symmetric or asymmetric keys. It is worth noting that any other type of authentication key may be used in the above mentioned system 1 as long as the first authentication keys KMᵢ, KSMᵢ used for the authentication over the first communication channel CHAN1 are distinct from the second authentication keys KRᵢ, KSRᵢ used for the authentication over the second channel CHAN2.

According to one embodiment, for at least one of the user authentication devices 30, 40, e.g., for the user authentication device 30, the user and server authentication keys KMᵢ and KSMᵢ, are symmetric keys and therefore identical and they are stored in association with the user identification code USER_IDᵢ. In this case, the user authentication device 30 and the transaction server 50 are adapted to elaborate the plurality of transaction identification codes TRANS and the respective authentication keys KMᵢ, KSMi associated to the user identification code USER_IDᵢ in order to generate and send the terminal 10 the respective authentication codes for the authentication of the server 50 to the user authentication device 30 and the authentication of the user authentication device 30 to the server 50.

In this case, in order to authenticate the device 30 to the server 50 and vice-versa, the terminal 10 comprises processing means 13 for comparing the authentication codes generated and sent by the server 50 and the device 30.

In particular, for the authentication of the server 50 to the device 30, the server 50 elaborates the plurality of transaction identification codes TRANS and the first server authentication keys KSMᵢ associated to the user identification code USER_IDᵢ in order to generate and send to the terminal 10 an authentication code SC_KSMᵢ that is then transmitted to the device 30 via the first communication channel CHAN1. On the other hand, the user authentication device 30 elaborates the plurality of transaction identification codes TRANS and the first user authentication keys KMᵢ associated to the user identification code USER_IDᵢ in order to generate an authentication code CONTROL_SC_KMᵢ and compare it with the authentication code SC_KSMᵢ transmitted by the terminal 10. In this way, the user authentication device 30 verifies that the terminal 10 communicates with a transaction server 50 in which are stored the first server authentication keys KSMᵢ corresponding to the first user authentication keys KMᵢ stored in the device 30 itself.

At this point, after the previous verification, in order to authenticate the device 30 to the server 50, the device 30 elaborates a plurality of transaction identification codes TRANS, in a distinct order than in the transaction server 50, and the first authentication keys KMᵢ associated to the user identification code USER_IDᵢ in order to generate an authentication code U_KMᵢ and it sends so generated authentication code U_KMᵢ to the terminal 10 in order to allow terminal 10 to verify the matching between the authentication code U_KMᵢ generated and sent by the device 30 and the authentication code CONTROL_U_KSMᵢ generated by the transaction server 50 as function of the plurality of transaction identification codes TRANS and of the first authentication keys KSMᵢ associated to the user identification code USER_IDᵢ and sent to the terminal 10 and verify in such a way the transaction.

Advantageously, for both the devices 30,40, the authentication keys are symmetric and are stored in association with a user identification code USER_IDᵢ.

In this case, for the authentication of the server 50 to the device 40, the server 50 elaborates the plurality of transaction identification code TRANS and the second server authentication keys KSRᵢ associated to the user identification code USER_IDᵢ in order to generate and send to the terminal 10 an authentication code SC_KSRᵢ that is then transmitted to the device 40 through the second communication channel CHAN2. On the other hand, the user authentication device 40 elaborates the plurality of transaction identification codes TRANS and the second user authentication keys KRᵢ associated to the user identification code USER_IDᵢ in order to generate an authentication code CONTROL_SC_KRᵢ and compare it with the authentication code SC_KSRᵢ transmitted by terminal 10. In this way, the user authentication device 40 verifies that the terminal 10 communicates with the transaction server 50 in which are stored the second server authentication keys KSRᵢ corresponding to second user authentication keys KRᵢ stored on the device 40 itself.

At this point, after the previous verification, in order to authenticate the device 40 to the server 50, the device 40 elaborates the plurality of transaction codes TRANS, in a different order than in the transaction server 50, and the second authentication keys KRᵢ associated to the user identification code USER_IDᵢ in order to generate an authentication code U_KRᵢ and it sends such authentication code U_KRᵢ to the terminal 10 in order to allow the terminal 10 to verify the matching between the authentication code U_KRᵢ generated and sent by the device 40 and an authentication code CONTROL_U_KSRᵢ generated by the transaction server 50 as function of the plurality of transaction identification code TRANS and of the second authentication keys KSRᵢ associated to the user identification code USER_IDᵢ and sent to the terminal 10 and so validating the transaction.

According to one embodiment, the system comprises a plurality of transaction servers 50, each of them associated to a server identification code SC_IDⱼ. In this case, the storage means 32, 42 inside the authentication devices 30, 40 associated to the user identification code USER_IDᵢ store, for each j-th server identification code SC_IDⱼ, respectively first and second authentication keys KMᵢⱼ and KRᵢⱼ. In order to authenticate the USERᵢ user to the server 50, the server identification code SC_IDⱼ associated to the transaction request received by the terminal 10 must be known. Such server identification code SC_IDⱼ is therefore sent by the terminal 10 to the two authentication devices 30, 40 in order to allow the two authentication devices 30, 40 to extract from the respective storage means 32, 42 respectively the first and the second user authentication keys KMᵢⱼ and KRᵢⱼ associated to the server identification code SC_IDⱼ provided by the terminal 10.

According to an alternative embodiment, for at least one of the two user authentication devices 30, 40, e.g. for the devices 30, the authentication keys are asymmetric keys. In this case, the transaction server 50 and the user authentication device 30 are adapted to elaborate a plurality of transaction identification codes TRANS and the respective first authentication keys KSMᵢ, KMᵢ, distinct from each other, for generating and sending, through the terminal 10, respectively to the user authentication device 30 and the transaction server 40 respective authentication codes for the authentication of the server 50 to the user authentication device 30 and the authentication of the user authentication device 30 to the server 50.

In particular, for the authentication of the server 50 to the device 30, the server 50 elaborates the plurality of transaction identification codes TRANS and the first server authentication keys KSMᵢ for generating and sending to the terminal 10 an authentication code SC_KMᵢ that is then sent to the device 30 through the first communication channel CHAN1. In order to verify the validity of the authentication code SC_KMᵢ, the user authentication device 30 must have the public part of the server authentication key KSMᵢ. Such public part of the server authentication key KSMᵢ may either be sent to the device 30 by the transaction server 50 through the terminal 10 over the first communication channel CHAN1 or previously stored in the storage means 32 of the device 30.

At this point, after the previous verification, for authenticating the device 30 to the server 50, the device 30 elaborates the plurality of transaction identification codes TRANS and the first user authentication keys KMᵢ for generating and sending over the first communication channel CHAN1 to the terminal 10 an authentication code U_KMᵢ. In order to verify the validity of the authentication code U_KMᵢ, the terminal 10 must have the public part of the user authentication key KMᵢ. Such public part of the user authentication key KMᵢ may be sent to the terminal 10 by the device 30 over the first communication channel CHAN1 or by a third party or previously stored on the terminal 10.

Even in the case of asymmetric keys, it is worth noticing that the authentication keys may be asymmetric for both the authentication devices 30, 40.

Advantageously, the terminal 10 communicates, in sequence, with the first authentication device 30 and, subsequently, with the second authentication device 40. In this way, first a verification on the first authentication keys KMᵢ is carried out through the communication of the terminal 10 with the first authentication device 30 over the first communication channel CHAN1 and, only if such verification is positive, a second verification on the second authentication keys KRᵢ is carried out through the communication of the terminal 10 and the second authentication device 40 over the second communication channel CHAN2.

In order to discriminate the first authentication keys KMᵢ from the second authentication keys KRᵢ and identify the type of the authentication devices 30, 40, the authentication devices 30, 40 may send to the terminal 10 an identification code of the authentication device DEV_ID, that could be as an example stored in the storage means 31, 41.

According to the embodiment shown in the attached figures, the first authentication device 30 is a mobile terminal and the second authentication device 40 is an radio frequency identification or rfid tag. As an example, in this case the first communication channel CHAN1 is a bluetooth channel and the second communication channel CHAN2 is an rfid channel.

It is worth noticing that the two authentication devices 30, 40 may be a hand-held device, a notebook, a LAN network terminal or similar devices, as long as the authentication devices 30, 40 must be able to communicate with the terminal 10 over two distinct and independent communication channels CHAN1 and CHAN2.

Regarding the authentication keys stored on each authentication device 30, 40, in the particular case of an rfid tag 40 the storage means 42 comprise a read-only memory area 42a for the storage of the authentication keys KRᵢ and the user identification code USER_IDᵢ. In particular, the memory area 42a is not rewritable in order to avoid the potential tampering of the authentication keys KRᵢ and the user identification code USER_IDᵢ stored on it.

The rfid tag 40 may be externally associated to the mobile terminal 30, or it may be electrically connected with the mobile terminal 30. In the former case, the rfid tag 40 will be a passive tag and will need its own powering system or will need to receive power from an external rfid field, while in the latter case, the rfid tag 40 could be either an active, hence powered by the electrical circuit of the mobile terminal 30, or a passive tag.

According to a further aspect, the present invention concerns a method for performing a transaction in a system 1 that comprises the terminal 10 adapted to communicate via the first and the second communication channels CHAN1 and CHAN2 and adapted to carrying out the transaction required by the USERᵢ user and identified by the plurality of transaction identification codes TRANS, the two user authentication devices 30, 40 associated to a user identification code USER_IDᵢ and adapted to communicate with the terminal 10 via respectively the first communication channel CHAN1 and the second communication channel CHAN2 and comprising the storage means 32, 42 for storing the respective first and second user authentication keys, and a transaction server 50 adapted to communicate with the terminal 10 and comprising storage means 51 for storing, for each of the user authentication devices 30, 40, respectively the first and second server authentication keys, in which the first authentication keys are distinct from the second authentication keys. In a initial phase, the terminal 10 sends a transaction request to the device 30, or it receives such request from the device 30. Subsequently, the method requires an authentication phase of the transaction server 50 to the first user authentication device 30 and vice-versa by means of the first authentication keys, and an authentication phase of the transaction server 50 to the second authentication device 40 and vice-versa by means of the second authentication keys. Finally, once the user is authenticated through the two user authentication devices, the transaction required by the user may be performed.

As it may be appreciated from the previous description, the system and the method according to the present invention allow to satisfy the requirements and to overcome the drawbacks described in the introductory part of this description related to the state of the art.

Clearly, a technician with field experience, with the intent of satisfying specific and potential needs, could make many changes and variations to the system and the method according to the aforementioned invention. Moreover, all of these changes and variations are comprised in the area of the protection of the invention as defined in the following claims.

## Claims

1. System (1) for performing a transaction comprising:
- a terminal (10) adapted to perform a transaction required by a user (USERᵢ) and identified by a plurality of transaction identification codes (TRANS),
- user authentication means (20) adapted to communicate with said terminal (10) and associated to a user identification code (USER_IDᵢ),
- a transaction server (50) adapted to communicate with said terminal (10),
**characterized by the fact that**
- said terminal (10) comprises first communication means (11) adapted to communicate through a first communication channel (CHAN1) and second communication means (12) adapted to communicate through a second communication channel (CHAN2),
- said user authentication means (20) comprise a first (30) and a second (40) authentication device adapted to communicate with said terminal (10) through respectively said first communication channel (CHAN1) and said second communication channel (CHAN2) and comprising storage means (32, 42) for storing respective first (KMᵢ) and second (KRᵢ) user authentication keys,
- said transaction server (50) comprises storage means (51) for storing, for said first and second authentication devices (30,40), respectively first (KSMᵢ) and second (KSRᵢ) server authentication keys,
- said first authentication keys (KMᵢ, KSMᵢ) are distinct from said second authentication keys (KRᵢ, KSRᵢ).

2. System (1) according to claim 1, wherein each of said first and second authentication devices (30,40) and transaction server (50) comprises computing means (33,43,52) for generating authentication codes in function of the authentication keys stored in the respective storage means (32,42,51) and of said plurality of transaction identification codes (TRANS).

3. System (1) according to claim 1 or 2, wherein for at least one of said first and second authentication devices (30,40), the authentication keys are symmetric keys and are stored in association to a user identification code (USER_IDᵢ),
- said server (50) and said at least one authentication device are adapted to elaborate said plurality of transaction identification codes (TRANS) and the respective authentication keys associated to said user identification code for generating and sending to said terminal (10) respective authentication codes for the authentication of the server (50) to said at least one user authentication device and of said at least one user authentication device to the server (50).

4. System (1) according to claim 3 wherein said terminal (10) comprises computing means (13) for comparing the authentication codes generated and sent by the server (50) and by said at least one user authentication device.

5. System (1) according to claim 3 or 4, comprising a plurality of transaction servers, each transaction server being associated to a server identification code (SC_IDⱼ), the storage means (32, 42) of the user authentication devices (30,40) comprise, for each server identification code, respective first and second user authentication keys (KMᵢⱼ, KRᵢⱼ).

6. System (1) according to claim 4 wherein the terminal (10) is adapted to identify and send to said two user authentication devices (30,40) said server identification code (SC_IDⱼ), said authentication devices (30,40) being adapted to extract from the respective storage means (32,42) the first and the second user authentication keys associated to said server identification code sent by the terminal (10).

7. System (1) according to any of claims 3 to 6, wherein, for both said first and second authentication devices, the authentication keys are symmetric keys and are stored in association to a user identification code.

8. System (1) according to claim 1 or 2 wherein, for at least one of said first or second user authentication device, the authentication keys are asymmetric keys,
- said transaction server (50) and said at least one user authentication device are adapted to elaborate said plurality of transaction identification codes (TRANS) and the respective authentication keys for generating and sending, through said terminal (10), respectively to said at least one user authentication device and said transaction server (50) respective authentication codes for the authentication of the server to the user authentication device and of the user authentication device to the server.

9. System (1) according to claim 8 wherein, for both said first and second user authentication devices, the authentication keys are asymmetric keys.

10. System (1) according to any of claims 1 to 9, wherein said terminal (1) communicates, in sequence, with the first user authentication device (30) through said first communication channel (CHAN1) and, subsequently, with the second authentication device (40) through said second communication channel (CHAN2).

11. System (1) according to any of claims 1 to 10, wherein said first user authentication device comprises a mobile terminal and said second user authentication device comprises an rfid tag.

12. Method for performing a transaction in a system comprising:
- a terminal adapted to communicate through a first and a second communication channel and adapted to perform a transaction required by a user and identified by a plurality of transaction identification codes,
- a first and a second user authentication device associated to a user identification code and adapted to communicate with said terminal through respectively said first communication channel and said second communication channel comprising storage means for storing respective first and second user authentication keys,
- a transaction server adapted to communicate with said terminal and comprising storage means for storing, for each authentication device, respective first and second server authentication keys, wherein said first authentication keys are distinct from said second authentication keys,
said method comprises the following steps:
- receiving a transaction request,
- authenticating the transaction server to said first user authentication device and vice-versa by means of the first authentication keys,
- authenticating the transaction server to said second user authentication device and vice-versa by means of the second authentication keys, and
- performing said transaction.

## Amended claims

### Amended claims in accordance with Rule 137(2) EPC.

**1.** System (1) for performing a transaction comprising:
- a terminal (10) adapted to perform a transaction required by a user (USERᵢ) and identified by a plurality of transaction identification codes (TRANS),
- user authentication means (20) adapted to communicate with said terminal (10) and associated to a user identification code (USER_IDᵢ),
- a transaction server (50) adapted to communicate with said terminal (10),
wherein
- said terminal (10) comprises first communication means (11) adapted to communicate through a first communication channel (CHAN1),
- said user authentication means (20) comprise a first (30) authentication device adapted to communicate with said terminal (10) through said first communication channel (CHAN1) and comprising storage means (32) for storing first (KMᵢ) user authentication keys,
- said transaction server (50) comprises storage means (51) for storing, for said first authentication device (30), first (KSMᵢ) server authentication keys,
**characterized in that**
- said terminal (10) comprises second communication means (12) adapted to communicate through a second communication channel (CHAN2),
- said user authentication means (20) comprise a second authentication device (40) adapted to communicate with said terminal (10) through said second communication channel (CHAN2) and comprising storage means (42) for storing second user authentication keys (KRᵢ),
- said storage means (51) storing, for said second authentication device (40), second server authentication keys (KSRᵢ) ,
- said first authentication keys (KMᵢ, KSMᵢ) are distinct from said second authentication keys (KRᵢ, KSRᵢ), and
- each of said first and second authentication devices (30,40) and transaction server (50) comprises computing means (33,43,52) for generating authentication codes in function of the authentication keys stored in the respective storage means (32,42,51) and of said plurality of transaction identification codes (TRANS).

**2.** System (1) according to claim 1, wherein for at least one of said first and second authentication devices (30,40), the authentication keys are symmetric keys and are stored in association to a user identification code (USER_IDᵢ),
- said server (50) and said at least one authentication device are adapted to elaborate said plurality of transaction identification codes (TRANS) and the respective authentication keys associated to said user identification code for generating and sending to said terminal (10) respective authentication codes for the authentication of the server (50) to said at least one user authentication device and of said at least one user authentication device to the server (50).

**3.** System (1) according to claim 2, wherein said terminal (10) comprises computing means (13) for comparing the authentication codes generated and sent by the server (50) and by said at least one user authentication device.

**4.** System (1) according to claim 2 or 3, comprising a plurality of transaction servers, each transaction server being associated to a server identification code (SC_IDⱼ), the storage means (32, 42) of the user authentication devices (30,40) comprise, for each server identification code, respective first and second user authentication keys (KMᵢⱼ, KRᵢⱼ).

**5.** System (1) according to claim 3 wherein the terminal (10) is adapted to identify and send to said two user authentication devices (30,40) said server identification code (SC_IDⱼ), said authentication devices (30,40) being adapted to extract from the respective storage means (32,42) the first and the second user authentication keys associated to said server identification code sent by the terminal (10).

**6.** System (1) according to any of claims 2 to 5, wherein, for both said first and second authentication devices, the authentication keys are symmetric keys and are stored in association to a user identification code.

**7.** System (1) according to claim 1 wherein, for at least one of said first or second user authentication device, the authentication keys are asymmetric keys,
- said transaction server (50) and said at least one user authentication device are adapted to elaborate said plurality of transaction identification codes (TRANS) and the respective authentication keys for generating and sending, through said terminal (10), respectively to said at least one user authentication device and said transaction server (50) respective authentication codes for the authentication of the server to the user authentication device and of the user authentication device to the server.

**8.** System (1) according to claim 7, wherein, for both said first and second user authentication devices, the authentication keys are asymmetric keys.

**9.** System (1) according to any of claims 1 to 8, wherein said terminal (1) communicates, in sequence, with the first user authentication device (30) through said first communication channel (CHAN1) and, subsequently, with the second authentication device (40) through said second communication channel (CHAN2).

**10.** System (1) according to any of claims 1 to 9, wherein said first user authentication device comprises a mobile terminal and said second user authentication device comprises an rfid tag.

**11.** Method for performing a transaction in a system comprising:
- a terminal adapted to communicate through a first and a second communication channel and adapted to perform a transaction required by a user and identified by a plurality of transaction identification codes,
- a first and a second user authentication device associated to a user identification code and adapted to communicate with said terminal through respectively said first communication channel and said second communication channel comprising storage means for storing respective first and second user authentication keys,
- a transaction server adapted to communicate with said terminal and comprising storage means for storing, for each authentication device, respective first and second server authentication keys, wherein said first authentication keys are distinct from said second authentication keys,
said method comprises the following steps:
- receiving a transaction request,
- authenticating the transaction server to said first user authentication device and vice-versa by means of the first authentication keys,
- authenticating the transaction server to said second user authentication device and vice-versa by means of the second authentication keys, and
- performing said transaction,
wherein said step of authenticating comprises the step of generating authentication codes in function of the authentication keys stored in the respective storage means and of said plurality of transaction identification codes.
